# EUROPÄISCHE PATENTSCHRIFT

(11) **EP 3 597 009 B1**
(45) Veröffentlichungstag und Bekanntmachung des Hinweises auf die Patenterteilung: **05.05.2021**
(21) Anmeldenummer: 18712171.0
(22) Anmeldetag: 15.03.2018
(51) Int. Cl.: H05B 47/10, H05B 45/00

(54) **TECHNIKEN ZUR IMPLEMENTIERUNG EINER BESTIMMTEN LICHTCHARAKTERISTIK**
TECHNIQUES FOR THE IMPLEMENTATION OF A PARTICULAR LIGHTING CHARACTERISTIC
TECHNIQUES DE MIS EN OEVRE D'UNE CHARACTERISTIQUE PARTICULAIRE D'ÉCLAIRAGE

(30) Priorität: 17.03.2017 DE 102017204479
(43) Veröffentlichungstag der Anmeldung: 22.01.2020
(73) Patentinhaber: Tridonic GmbH & Co KG, 6851 Dornbirn (AT)
(72) Erfinder: WALLNER, Stefan, 6845 Hohenems (AT)
(74) Vertreter: Banzer, Hans-Jörg
(86) Internationale Anmeldenummer: PCT/EP2018/056602
(87) Internationale Veröffentlichungsnummer: WO 2018/167241

(56) Entgegenhaltungen:
- WO-A1-2015/025267
- WO-A2-2013/186670
- DE-A1-102013 015 814
- "EVG für T5 Lampen Technische Fibel", , 1. Mai 2005 (2005-05-01), XP055267967, Gefunden im Internet: URL:https://www.osram.de/media/resource/HI RES/334143/3698889/technical-guide---ecgs- for-t5-lamps.pdf [gefunden am 2016-04-22]

## Beschreibung

### TECHNISCHES GEBIET

Verschiedene Ausführungsformen der Erfindung betreffen im Allgemeinen Techniken, um eine bestimmte Lichtcharakteristik bei der Beleuchtung zu erzielen. Verschiedene Beispiele der Erfindung betreffen insbesondere das Durchsuchen einer elektronischen Datenbank mit Einträgen für eine Vielzahl von Betriebsgeräten und eine Vielzahl von Leuchten und das Ermitteln einer Kombination aus einem ausgewählten Betriebsgerät und einer ausgewählten Leuchte, sowie eines elektrischen Arbeitspunkts des ausgewählten Betriebsgeräts basierend auf dem Durchsuchen der Datenbank.

### HINTERGRUND

Bei der Beleuchtung von Szenen und Objekten kann es oftmals erforderlich sein, eine bestimmte Lichtcharakteristik zu implementieren. Beispielsweise kann es erforderlich sein, eine bestimmte Lichtstärke umzusetzen.

Moderne Festkörper-basierte Leuchten können eine gewisse Fertigungstoleranz aufweisen. Beispielsweise wird beobachtet, dass unterschiedliche Fertigungszyklen - trotz nominell gleicher Prozessparameter - Leuchten mit unterschiedlichen Lichtcharakteristiken bereitstellen können. Manchmal kann es sogar vorkommen, dass innerhalb eines Fertigungszyklus unterschiedliche Leuchten unterschiedliche Lichtcharakteristiken aufweisen. Ferner wird beobachtet, dass die Lichtcharakteristik einer Leuchte von dem verwendeten Betriebsgerät, welches die Leuchte mit Energie versorgt, abhängen kann. Aus solchen Gründen kann es oftmals schwierig sein, eine bestimmte Lichtcharakteristik zu implementieren. Insbesondere kann es gemäß Referenzimplementierungen erforderlich sein, dass der Installateur eine manuelle Kalibration des Arbeitspunkts des Betriebsgeräts vornimmt, um die gewünschte Lichtcharakteristik zu implementieren. Eine solche manuelle Einstellung kann jedoch zeitaufwendig und kostenintensiv sein und darüber hinaus fehleranfällig. Beispielsweise kann eine Reproduzierbarkeit bei der Einstellung von bestimmten Lichtcharakteristiken gemäß Referenzimplementierungen begrenzt sein - dies kann insbesondere in Bezug auf die Lichtstärke zutreffen.

Aus der Druckschrift DE 10 2013 015814 A1 sind Tabellen bekannt, aus denen für eine vorgegebene Lichtcharakteristik aus einer Vielzahl von Betriebsgeräten und einer Vielzahl von Leuchten eine Kombination aus einem Betriebsgerät und einer Leuchte sowie ein entsprechender elektrischer Arbeitspunkt ermittelt werden können.

In der Druckschrift WO 2013/186670 A2 ist ein Computer offenbart, dessen Datenbank zur Ermittlung und Ausgabe eines Suchergebnisses verwendet wird.

### ZUSAMMENFASSUNG

Es besteht ein Bedarf für verbesserte Techniken zur Implementierung einer Lichtcharakteristik. Insbesondere besteht ein Bedarf für solche Techniken, die zumindest einige der oben genannten Einschränkungen und Nachteile beheben.

Diese Aufgabe wird erfindungsgemäß durch ein Verfahren mit den Merkmalen des unabhängigen Anspruchs 1 und eine Vorrichtung mit den Merkmalen des unabhängigen Anspruchs 10 gelöst. Die Merkmale der abhängigen Patentansprüche definieren Ausführungsformen der Erfindung.

Das erfindungsgemäße Verfahren umfasst das Durchsuchen einer elektronischen Datenbank mit Einträgen für eine Vielzahl von Betriebsgeräten und für eine Vielzahl von Leuchten. Das Durchsuchen basiert auf einer Anfrage. Die Anfrage indiziert eine Lichtcharakteristik. Das Verfahren umfasst weiterhin das Ermitteln einer Kombination aus einem ausgewählten Betriebsgerät aus der Vielzahl von Betriebsgeräten und einer ausgewählten Leuchte aus der Vielzahl von Leuchten, sowie eines elektrischen Arbeitspunkt des ausgewählten Betriebsgeräts. Dieses Ermitteln basiert auf dem Durchsuchen der elektronischen Datenbank. Das Verfahren umfasst weiterhin das Bereitstellen einer Ausgabe. Die Ausgabe indiziert das ausgewählte Betriebsgerät, die ausgewählte Leuchte und den ermittelten Arbeitspunkt.

Die unterschiedlichen Betriebsgeräte können jeweils eine Energie zum Betrieb der entsprechenden Leuchte bereitstellen. Dazu können die Betriebsgeräte beispielsweise einen Aufwärtswandler oder Abwärtswandler umfassen. Die Betriebsgeräte können beispielsweise einen Transformator und/oder einen Glättungsfilter umfassen. Die Betriebsgeräte können beispielsweise eine AC/DC-Wandler umfassen. Unterschiedliche Betriebsgeräte aus der Vielzahl von Betriebsgeräten können dabei unterschiedliche Spezifikationen in Bezug auf die implementierbaren Arbeitspunkte aufweisen. Beispielsweise können manche Betriebsgeräte einen größeren Strom oder eine größere Spannung bereitstellen, als andere Betriebsgeräte.

In den verschiedenen hierin beschriebenen Beispielen können unterschiedliche Typen von Leuchten verwendet werden. Beispielsweise könnte die Datenbank Einträge für unterschiedliche Typen von Leuchten umfassen. Beispielsweise kann von Leuchten Festkörper-basierte Leuchten wie Leuchtdioden umfassen. Andere Beispiele umfassen Gasentladungslampen, Halogenlampen und Glühlampen.

Die elektronische Datenbank könnte beispielsweise dezentral implementiert werden. Beispielsweise könnte das Durchsuchen der elektronischen Datenbank über einen mit dem Internet verbundenen Server erfolgen.

Die Kombination aus dem ausgewählten Betriebsgerät und der ausgewählten Leuchte, sowie des entsprechenden elektrischen Arbeitspunkt des ausgewählten Betriebsgeräts kann eine besonders gute Übereinstimmung mit der in der Anfrage spezifizierten Lichtcharakteristik aufweisen. Durch solche Techniken kann es also möglich sein, diejenige Kombination aus ausgewählten Betriebsgerät und ausgewählter Leuchte mit dem entsprechenden Arbeitspunkt zu identifizieren, die die gewünschte Lichtcharakteristik besonders gut trifft. Durch die elektronische Abfrage kann insbesondere eine manuelle Konfiguration entfallen oder zumindest unterstützt werden.

Das Verfahren umfasst weiterhin das Programmieren des ausgewählten Betriebsgeräts zum Betrieb an dem ermittelten Arbeitspunkt automatisch basierend auf der Ausgabe.

Das Programmieren kann zum Beispiel einen Zugriff auf einen internen Speicher des Betriebsgeräts umfassen, wobei entsprechende Konfigurationsdaten in dem Speicher des Betriebsgeräts hinterlegt werden können. Dadurch kann der Betrieb des ausgewählten Betriebsgeräts an dem ermittelten Arbeitspunkt ausgelöst werden. Z.B. könnte dadurch die Strom-Spannungs-Charakteristik des Betriebsgeräts eingestellt werden.

Das Programmieren des ausgewählten Betriebsgeräts umfasst das Erstellen einer elektronischen Konfigurationsdatei. Diese Konfigurationsdatei umfasst eine Identifikation des ausgewählten Betriebsgeräts, eine Identifikation der ausgewählten Leuchte und einen Konfigurationsparameter für den Arbeitspunkt. Die elektronische Konfigurationsdatei wird zu dem ausgewählten Betriebsgerät übertragen, beispielsweise mittels drahtloser Kommunikation, zum Beispiel Bluetooth, Zigbee, WLAN, etc. Eine solche Technik ermöglicht es, eine zeitliche Trennung zwischen dem Bereitstellen der Ausgabe und dem Übertragen der elektronischen Konfigurationsdatei an das ausgewählte Betriebsgerät zu implementieren. Derart kann beispielsweise die elektronische Konfigurationsdatei im Rahmen der Kommissionierung des ausgewählten Betriebsgeräts und der ausgewählten Leuchte vor Ort erfolgen; während die Anfrage an die Datenbank zu einem anderen Zeitpunkt, beispielsweise in einer Planungsphase erfolgen kann. Dies erhöht die Flexibilität und ermöglicht es insbesondere, die Kommissionierung vor Ort besonders kurz zu gestalten.

In den verschiedenen hierin beschriebenen Beispielen können ein oder mehrere unterschiedliche Lichtcharakteristiken berücksichtigt werden. Beispielsweise könnte die Lichtcharakteristik mindestens ein Element umfassen, welches aus folgender Gruppe ausgewählt ist: eine Lichtstärke; eine Lichtfarbe; eine Lichteffizienz; eine Toleranz der Lichtstärke; eine Toleranz der Lichtfarbe; und eine räumliche Lichtverteilung.

Beispielsweise kann die Lichtstärke den auf einen bestimmten Raumwinkel bezogenen Lichtstrom bezeichnen, beispielsweise in der Einheit Candela. Die Lichtfarbe kann beispielsweise die spektrale Verteilung oder die Lichttemperatur des Lichts bezeichnen. Die Lichteffizienz kann beispielsweise eine Beziehung zwischen der Lichtstärke und der verbrauchten elektrischen Energie zum Betrieb der entsprechenden Leuchte indizieren. Die Toleranz der Lichtstärke bzw. die Toleranz der Lichtfarbe können eine Genauigkeit spezifizieren, mit der die Implementierung einer bestimmten Lichtstärke oder Lichtfarbe gewährleistet werden kann. Es wäre auch möglich, dass die Toleranz einen zeitlichen Drift der entsprechenden Größe, zum Beispiel in Abhängigkeit der Betriebsstunden bezeichnet. Die räumliche Lichtverteilung kann beispielsweise eine geometrische Abstrahlungscharakteristik der Leuchte beschreiben.

Es ist beispielsweise möglich, dass zumindest einige Einträge der elektronischen Datenbank eine Abhängigkeit der Lichtcharakteristik einer jeweiligen Leuchte der Vielzahl von Leuchten von dem kombinierten Betriebsgerät aus der Vielzahl von Betriebsgeräten spezifizieren. Dies bedeutet, dass es möglich sein kann, dass die Lichtcharakteristik einer bestimmten Leuchte variiert, je nachdem mit welchem Betriebsgerät diese Leuchte zum Betrieb kombiniert wird. Durch Abbildung dieser Abhängigkeit in der Datenbank, kann die gewünschte Lichtcharakteristik besonders genau implementiert werden.

Entsprechend wäre es beispielsweise möglich, dass zumindest einige Einträge der elektronischen Datenbank eine Abhängigkeit der Lichtcharakteristik einer jeweiligen Leuchte aus der Vielzahl von Leuchten von dem Arbeitspunkt des kombinierten Betriebsgerät aus der Vielzahl von Betriebsgeräten spezifizieren. Dies bedeutet, dass eine Leuchte unterschiedliche Lichtcharakteristiken aufweisen kann, je nachdem bei welchem Arbeitspunkt das kombinierte Betriebsgerät betrieben wird. Durch Abbildung dieser Abhängigkeit in der Datenbank, kann die gewünschte Lichtcharakteristik besonders genau implementiert werden.

Typischerweise kann also durch die geeignete Wahl des Betriebsgeräts, sowie des entsprechenden Arbeitspunkts die Lichtcharakteristik über einen gewissen Bereich eingestellt werden. Daraus kann resultieren, dass die gewünschte Lichtcharakteristik durch mehr als eine Kombination von einem ausgewählten Betriebsgerät mit einer ausgewählten Leuchte bzw. eines zugehörigen Arbeitspunkts implementiert werden kann. Deshalb wäre es in manchen Beispielen auch möglich, dass mehrere Kombinationen jeweils aus einem ausgewählten Betriebsgerät und einer ausgewählten Leuchte sowie eines zugehörigen elektrischen Arbeitspunkts ermittelt werden und die Ausgabe diese mehreren Kombinationen indiziert. In einem solchen Fall könnte der Benutzer die geeignete Kombination aus den mehreren Kombinationen auswählen oder weitere Kriterien spezifizieren, um den Ergebnisraum einzuengen.

Zum Erzeugen der Einträge in der Datenbank können unterschiedliche Techniken verwendet werden. In manchen Beispielen kann es insbesondere möglich sein, z.B. im Rahmen eines Backend-Testprozesses in der Fertigung ein oder mehrere Kalibrationsmessungen durchzuführen. Solche Kalibrationsmessungen können für individuelle Leuchten durchgeführt werden oder für Testleuchten, die repräsentativ für mehrere Leuchten zum Beispiel einer Fertigungsreihe sind.

Zum Beispiel wäre es möglich, dass mehrere Kalibrationsmessungen der Lichtcharakteristik für eine zu charakterisierende Leuchte durchgeführt werden. Dabei können unterschiedlich Kalibrationsmessungen der mehreren Kalibrationsmessungen unterschiedlichen Kombinationen der zu charakterisierenden Leuchten mit Betriebsgeräten und/oder unterschiedliche Arbeitspunkte der Betriebsgeräte betreffen. Dann ist es möglich, basierend auf den Kalibrationsmessungen einen Eintrag in der Datenbank für die zu charakterisierende Leuchte zu erstellen. Dies bedeutet in anderen Worten, dass es möglich sein kann, eine zu charakterisierende Leuchte mit mehreren Betriebsgeräten im Rahmen der entsprechenden Kalibrationsmessungen zu testen. Dadurch kann genau erfasst werden, welche Lichtcharakteristik die entsprechende Leuchte bei Kombination mit den verschiedenen Betriebsgeräten bereitstellen kann.

Je nach Granularität, mit welcher diese Kalibrationsmessungen durchgeführt werden, ist es entsprechend möglich, dass die Einträge der Datenbank jeweils repräsentativ für individuelle Leuchten sind oder repräsentativ für Fertigungsreihen von Leuchten sind. Beispielsweise kann es insbesondere in Bezug auf solche Leuchten, die eine große Fertigungstoleranz auch innerhalb von Fertigungsreihen aufweisen, erstrebenswert sein, die Kalibrationsmessungen für individuelle Leuchten durchzuführen. Dadurch kann die Lichtcharakteristik besonders genau implementiert werden.

Voranstehend wurden verschiedene Techniken beschrieben, die es ermöglichen, basierend auf der Anfrage eine bestimmte Lichtcharakteristik zu spezifizieren. Alternativ oder zusätzlich wäre es aber auch möglich, dass die Anfrage ein oder mehrere Eigenschaften des Betriebsgeräts spezifiziert. Beispiele für solche Eigenschaften können zum Beispiel geometrische Dimensionen oder Kompatibilität mit bestimmten Schnittstellen-Technologien bezeichnen. Dadurch kann der Ergebnisraum weiter eingeengt werden. So wäre es zum Beispiel möglich, dass die Anfrage weiterhin einen Betriebsmodus des Betriebsgeräts indiziert, der aus folgender Gruppe ausgewählt ist: eine Lichtmanagementfähigkeit; ein Drift als Funktion der Zeit und/oder als Funktion der Temperatur; eine Lebensdauer; eine Dimmerfähigkeit; und ein Arbeitsmodus.

Beispielsweise kann die Lichtmanagementfähigkeit eine Kompatibilität mit bestimmten Steuerprotokollen, wie beispielsweise Phasenanschnittsmodulation von AC-Wechselspannung oder Dali-Bussystem oder ein anderes Steuerbussystem, bezeichnen. Beispielsweise kann der Drift als Funktion der Zeit und/oder als Funktion der Temperatur eine Stabilität des ausgewählten Arbeitspunkts als Funktion dieser Parameter bezeichnen. Die Lebensdauer kann beispielsweise eine typische Anzahl von Betriebsstunden bezeichnen, bis es basierend auf statistischen Erwartungen zu einem Fehlerereignis kommt. Die Dimmerfähigkeit kann beispielsweise eine Fähigkeit des Betriebsgeräts bezeichnen, die Leuchte bei unterschiedlichen Lichtstärken zu betreiben. Der Dimmerarbeitsmodus kann beispielsweise eine elektronische Implementierung eines Dimmerbetriebs bezeichnen. Beispielsweise könnte der Dimmerarbeitsmodus eine Pulsbreitenmodulation bezeichnen. Beispielsweise könnte der Dimmerarbeitsmodus einen Betrieb eines entsprechenden DC/DC Wandlers bezeichnen, etwa einen kontinuierlichen Betrieb oder einen lückenden Betrieb.

Der elektrische Arbeitspunkt kann im Allgemeinen unterschiedliche elektrische Betriebscharakteristiken des Betriebsgeräts bezeichnen. Beispielsweise könnte der elektrische Arbeitspunkt eine Leistungsaufnahme des Betriebsgeräts bezeichnen. Es wäre zum Beispiel auch möglich, dass der Arbeitspunkt einen von dem Betriebsgerät an die Leuchte bereitgestellten Laststrom umfasst. Der Arbeitspunkt könnte auch einen von dem ausgewählten Betriebsgerät an die Leuchte bereitgestellten Laststrom als Funktion der Zeit umfassen. Der Arbeitspunkt könnte einen vom ausgewählten Betriebsgerät an die ausgewählte Leuchte bereitgestellten Laststrom als Funktion der Betriebszeit umfassen. Der könnte ein Drift in bestimmten Stabilitätsparametern des Betriebsgeräts abgeschätzt werden.

Die erfindungsgemäße Vorrichtung umfasst mindestens einen Prozessor. Der mindestens eine Prozessor ist eingerichtet um die Schritte des erfindungsgemäßen Verfahrens durchzuführen

Ein erfindungsgemäßes Computerprogrammprodukt umfasst Programmcode, der von mindestens einem Prozessor ausgeführt werden kann. Ausführen des Programmcodes bewirkt, dass der Prozessor das erfindungsgemäße Verfahren ausführt.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.
FIG. 1 illustriert schematisch ein System mit einem Benutzerendgerät, einem Server und einer Datenbank gemäß verschiedener Beispiele.
FIG. 2 illustriert schematisch Einträge der Datenbank für eine Vielzahl von Betriebsgeräten und eine Vielzahl von Leuchten gemäß verschiedener Beispiele.
FIG. 3 illustriert schematisch eine Abhängigkeit einer Lichtstärke von einem Laststrom für verschiedene Betriebsgeräte gemäß verschiedener Beispiele.
FIG. 4 illustriert schematisch einen Laststrom als Funktion der Betriebszeit gemäß verschiedener Beispiele.
FIG. 5 ist ein Flussdiagramm eines Verfahrens gemäß verschiedener Beispiele.
FIG. 6 ist ein Flussdiagramm eines Verfahrens gemäß verschiedener Beispiele.
FIG. 7 ist ein Flussdiagramm eines Verfahrens gemäß verschiedener Beispiele.

### DETAILLIERTE BESCHREIBUNG VON AUSFÜHRUNGSFORMEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden verschiedene Techniken beschrieben, um basierend auf einer Datenbank-Abfrage eine gewünschte Lichtcharakteristik zu implementieren. Diese Techniken basieren auf der Erkenntnis, dass ein besonders großer Parameterraum durch viele verschiedene Möglichkeiten unterschiedliche Leuchten mit unterschiedlichen Betriebsgeräten zu kombinieren existiert. Dieser Parameter wird weiter vergrößert durch die Möglichkeit, Betriebsgeräte bei unterschiedlichen Arbeitspunkten zu betreiben. Die Auswahl der geeigneten Kombination aus Betriebsgerät und Leuchte und assoziiertem Arbeitspunkt kann deshalb in Referenzimplementierungen besonders aufwendig und fehleranfällig sein.

In den hierin beschriebenen Techniken ist es möglich, eine elektronische Datenbank mit Einträgen für eine Vielzahl von Betriebsgeräten und eine Vielzahl von Leuchten basierend auf einer Anfrage, die eine Lichtcharakteristik einer Leuchte indiziert, zu durchsuchen. Dann ist es möglich, basierend auf dem Durchsuchen der elektronischen Datenbank eine Kombination aus einem ausgewählten Betriebsgerät aus der Vielzahl von Betriebsgeräten und einer ausgewählten Leuchte aus der Vielzahl von Leuchten, sowie eines elektrischen Arbeitspunkt des ausgewählten Betriebsgeräts zu ermitteln. Es kann eine Ausgabe bereitgestellt werden, welche das ausgewählte Betriebsgerät, die ausgewählte Leuchte und den ermittelten Arbeitspunkt indiziert.

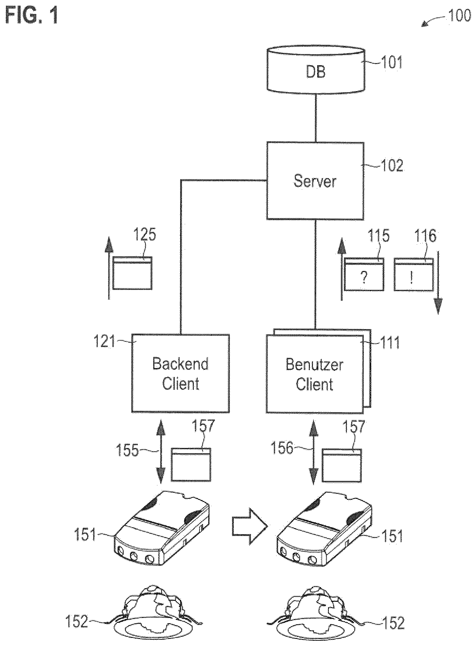

FIG. 1 illustriert Aspekte in Bezug auf ein System 100 welches eine entsprechende Datenbank 101 umfasst. In dem Beispiel der FIG. 1 erfolgt ein Zugriff auf die Datenbank 101 durch einen Server 102, beispielsweise einen Internet-Server. Ein Benutzer-Endgerät 111, beispielsweise ein Laptop, ein Mobiltelefon oder ein tragbares Installationsgerät, ist eingerichtet, um eine Anfrage 115 an den Server 102 zu senden. Diese Anfrage 115 indiziert eine gewünschte Lichtcharakteristik. Dann kann die Datenbank 101 basierend auf dieser Anfrage 115 durchsucht werden.

Die Datenbank 101 weist Einträge für eine Vielzahl von Betriebsgeräten 151 und eine Vielzahl von Leuchten 152 auf. Basierend auf dem Durchsuchen der Datenbank ist es möglich, eine Kombination aus einem ausgewählten Betriebsgerät 151 aus der Vielzahl von Betriebsgeräten und einer ausgewählten Leuchte 152 aus der Vielzahl von Leuchten 152 zu ermitteln, sowie einen elektrischen Arbeitspunkt des ausgewählten Betriebsgeräts 151. Diese Kombination mit den zugehörigen Arbeitspunkt kann die gewünschte Lichtcharakteristik besonders gut erfüllen. Die ermittelte Kombination zusammen mit dem Arbeitspunkt kann in Form einer Ausgabe 116 an das Endgerät 111 übermittelt werden.

In manchen Beispielen könnte zum Beispiel eine entsprechende Wiedergabe auf dem Endgerät 111 erfolgen, die die Kombination mit zugehörigem Arbeitspunkt indiziert. In manchen Beispielen könnte auch eine Vielzahl von Kombinationen mit zugehörigen Arbeitspunkten indiziert werden, sodass ein Benutzer des Endgeräts 111 die geeignete Kombination mit zugehörigem Arbeitspunkt auswählen könnte.

In FIG. 1 ist ferner dargestellt, dass es möglich ist, das Betriebsgerät 151 zum Betrieb an dem ermittelten Arbeitspunkt zu programmieren. Ein solches Programmieren könnte beispielsweise durch einen Hersteller oder einen Zwischenhändler erfolgen. Dann kann eine entsprechende Datenverbindung 155 zwischen einem Backend-Gerät 121 und dem Betriebsgerät 151 hergestellt werden, beispielsweise im Bereich einer Fabrik oder eines Lagers. Alternativ oder zusätzlich wäre es auch möglich, dass das Programmieren des Betriebsgeräts 151 im Rahmen der Kommissionierung erfolgt. In einem solchen Beispiel könnte eine Datenverbindung 156 zwischen dem Betriebsgerät 151 und dem Endgerät 111 des Benutzers hergestellt werden (wobei im Allgemeinen dasselbe Endgerät 111, welches auch für die Anfrage 155 und die Ausgabe 116 verwendet wird, für die Datenverbindung 156 verwendet werden kann, oder aber auch ein anderes Endgerät). Die Datenverbindung 156 könnte zum Beispiel im Bereich des Orts, an dem die Leuchte 152 und das Betriebsgerät 151 installiert werden sollen, aufgebaut werden.

Das Programmieren des Betriebsgeräts 151 kann zum Beispiel das Erstellen einer Konfigurationsdatei 157 umfassen. Diese Konfigurationsdatei 157 kann eine Identifikation des Betriebsgeräts 151 und der Leuchte 152 umfassen, sowie einen Konfigurationsparameter für den ermittelten Arbeitspunkt. Durch das Vorsehen der Identifikation des Betriebsgeräts 141 und der Identifikation der Leuchte 152 kann sichergestellt werden, dass das richtige Betriebsgerät 151 basierend auf der Konfigurationsdatei 151 eingerichtet wird.

Solche Techniken wie sie voranstehend in Bezug auf FIG. 1 beschrieben wurden, sind flexibel für unterschiedlichste Typen von Lichtcharakteristiken einsetzbar. Beispielsweise könnte die Lichtcharakteristik eine bestimmte gewünschte Lichtstärke der Leuchte 152 betreffen. Es wäre aber alternativ oder zusätzlich auch möglich, dass sie Lichtcharakteristik beispielsweise eine Lichtfarbe, eine Lichteffizienz, eine Toleranz der Lichtstärke, eine Toleranz der Lichtfarbe und/oder eine räumliche Lichtverteilung der Leuchte 152 betrifft. Entsprechende Informationen können auch in der Ausgabe 116 beinhaltet sein.

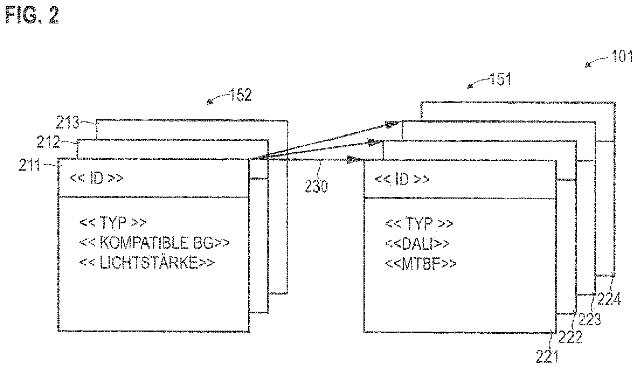

FIG. 2 illustriert Aspekte in Bezug auf Einträge der Datenbank 101. In dem Beispiel der FIG. 2 umfasst die Datenbank 101 mehrere Einträge 211-213 für unterschiedliche Leuchten 152, sowie mehrere Einträge 221-224 für unterschiedliche Betriebsgeräte 151. Eine solche Struktur der Datenbank 101 ist jedoch rein beispielhaft und es wäre in anderen Beispielen auch möglich, dass unterschiedliche Einträge zum Beispiel direkt Kombinationen aus Leuchten 152 und Betriebsgeräten 151 beschreiben.

In dem Beispiel der FIG. 2 umfasst die Datenbank 101 auch Verknüpfungen 230 zwischen verschiedenen Einträgen 211-213 für Leuchten 152 und Einträgen 221-224 für Betriebsgeräte 151 (in FIG. 2 sind aus Gründen der Übersichtlichkeit lediglich die Verknüpfungen 230 für den Eintrag 211 dargestellt). Diese Verknüpfungen 230 können zum Beispiel eine grundsätzliche Kompatibilität für eine Kombination der entsprechenden Leuchte 152 des jeweiligen Eintrags 211 mit dem jeweiligen Betriebsgerät 151 des entsprechenden Eintrags 221-224 bezeichnen. Beispielsweise ist in dem in FIG. 2 dargestellten Szenario die Leuchte 152, die dem Eintrag 211 entspricht, mit den Betriebsgeräten 151, die den Einträgen 221-223 entsprechen, kompatibel.

In FIG. 2 ist ferner dargestellt, dass die Einträge 211-213 für die Leuchten beispielsweise eine Identifikation der jeweiligen Leuchte, zum Beispiel eine Seriennummer, etc. umfassen. Die Einträge 211-213 umfassen auch eine Typenbezeichnung sowie eine Liste der kompatiblen Betriebsgeräte 151, die die Verknüpfungen 230 definiert. Außerdem ist in den Einträgen 211-213 die Spezifikation für die Lichtcharakteristik hinterlegt (in dem Beispiel der FIG. 2 ist die Lichtstärke dargestellt).

In FIG. 2 ist ferner dargestellt, dass die Einträge 221-224 für die Betriebsgeräte 151 wiederum eine Identifikation des jeweiligen Betriebsgeräts 151 aufweisen. Außerdem weisen die Einträge 221-224 auch eine Typenbezeichnung auf, sowie eine Lichtmanagementfähigkeit (in FIG. 2 ist dargestellt, ob der Dali-Bus unterstützt wird), sowie eine Lebensdauer (in FIG. 2 ist die durchschnittliche Zeit zwischen Fehlerereignissen dargestellt, engl. mean time between failure).

Der konkrete Informationsgehalt, der in den verschiedenen Einträgen 211-213, 221-224 hinterlegt sein kann, kann in unterschiedlichen Implementierungen variieren.

Grundsätzlich ist es auf Grundlage solcher Einträge 211-213, 221-224 möglich, eine Abhängigkeit der Lichtcharakteristik der jeweiligen Leuchte 152 von dem kombinierten Betriebsgerät 151 zu spezifizieren. Außerdem können Abhängigkeiten der Lichtcharakteristik der jeweiligen Leuchte 152 von dem Arbeitspunkt des kombinierten Betriebsgeräts spezifiziert werden.

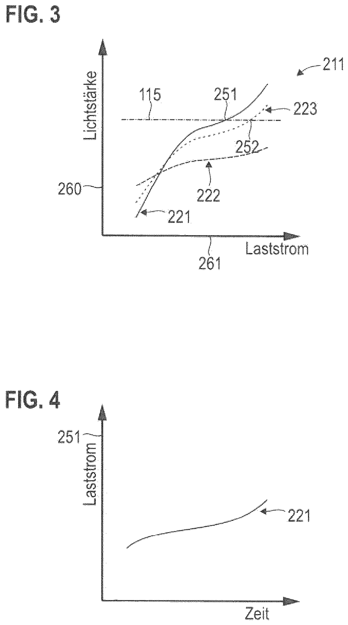

FIG. 3 illustriert Aspekte in Bezug auf eine Abhängigkeit der Lichtstärke einer Leuchte von den kombinierten Betriebsgerät 151 sowie von dem verwendeten Arbeitspunkt des jeweiligen Betriebsgeräts. Insbesondere ist in FIG. 3 die erwartete Lichtstärke 260 als Funktion des Laststroms 261, den das jeweilige Betriebsgerät 151 an die entsprechende Leuchte 152 bereitstellt, dargestellt.

Aus FIG. 3 ist ersichtlich, dass unterschiedliche Lastströme 261 in einer unterschiedlichen Lichtstärke 260 resultieren können. Um die durch die Anfrage 115 spezifizierte Lichtstärke 115 (gestrichelt-gepunktete Linie in FIG. 3) zu implementieren, kommt lediglich eine Kombination der entsprechenden Leuchte 152 mit den Betriebsgeräten 151, die durch die Einträge 221, 223 beschrieben werden, infrage. Die entsprechenden Arbeitspunkte 251, 252 sind in FIG. 3 gekennzeichnet.

FIG. 4 illustriert Aspekte in Bezug auf eine Zeitabhängigkeit des Laststroms 261. Insbesondere ist in FIG. 4 ein Szenario dargestellt, bei welchem der Laststrom 261 als Funktion der Betriebszeit für das Betriebsgerät 151 gemäß dem Eintrag 221 für die zugehörige Leuchte 152 angepasst werden muss, um die gewünschte Lichtstärke 260 zu erzielen. Es wäre möglich, dass ein solcher Drift als Funktion der Zeit in dem entsprechenden Eintrag 211-213, 221-224 der Datenbank 101 hinterlegt ist.

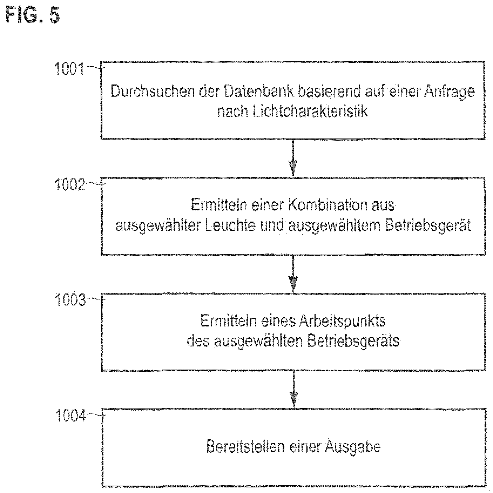

FIG. 5 ist ein Flussdiagramm eines Verfahrens gemäß verschiedener Beispiele. Zunächst erfolgt in Schritt 1001 das Durchsuchen einer Datenbank basierend auf einer Anfrage nach einer Lichtcharakteristik. Diese Lichtcharakteristik könnte beispielsweise eine Lichtstärke, eine Lichtfarbe, eine Lichteffizienz, eine Toleranz der Lichtstärke, eine Toleranz der Lichtfarbe und/oder eine räumliche Lichtverteilung betreffen.

In Schritt 1002 erfolgt dann das Ermitteln einer Kombination aus einer ausgewählte Leuchte und einem ausgewählten Betriebsgerät aus einer Vielzahl von möglichen Kombinationen. Dies erfolgt basierend auf der in der Anfrage spezifizierten Lichtcharakteristik. In manchen Beispielen wäre es auch möglich, dass mehrere Kombinationen ermittelt werden, die die angefragte Lichtcharakteristik grundsätzlich implementieren können.

In Schritt 1003 wird anschließend ein Arbeitspunkt des ausgewählten Betriebsgeräts ermittelt. Beispielsweise kann der Arbeitspunkt einen von dem ausgewählten Betriebsgerät an die ausgewählte Leuchte bereitgestellten Laststrom und/oder den Laststrom als Funktion der Betriebszeit umfassen.

In Schritt 1004 wird anschließend eine Ausgabe bereitgestellt, die indikativ für die ermittelte Kombination sowie den ermittelten Arbeitspunkt ist. Auf Grundlage der Ausgabe kann zum Beispiel das Betriebsgerät geeignet konfiguriert werden. Optional könnte auch die Leuchte geeignet konfiguriert werden.

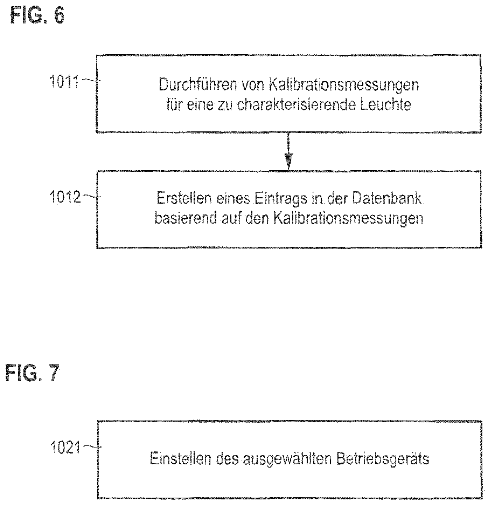

Es sind unterschiedliche Techniken denkbar, um die Einträge 211-213, 221-224 der Datenbank 101 zu bestimmen. Bezugnehmend auf die voranstehend diskutierten FIGs. 3 oder 4: Beispielsweise könnten entsprechende Abhängigkeiten zwischen der Lichtstärke 260 und den Laststrom 261 und den Laststrom an dem ermittelten Arbeitspunkt 251 unter Zeit basierend auf Kalibrationsmessungen bestimmt werden. FIG. 6 ist ein Flussdiagramm eines Verfahrens, welches Aspekte in Bezug auf eine Kalibrationsmessung illustriert.

Zunächst werden in Schritt 1011 mehrere Kalibrationsmessungen für eine zu charakterisierende Leuchte durchgeführt. Zum Beispiel könnten solche Kalibrationsmessungen im Rahmen des Backend-Tests in der Fabrik durchgeführt werden. Unterschiedliche Kalibrationsmessungen können dabei unterschiedliche Kombinationen einer zu charakterisierenden Leuchte mit Betriebsgeräten und/oder unterschiedlichen Arbeitspunkten der Betriebsgeräte betreffen.

Dann wird in Schritt 1012 ein entsprechender Eintrag in der Datenbank basierend auf den Kalibrationsmessungen für die Leuchte erstellt.

Beispielsweise wäre es in manchen Beispielen möglich, das Verfahren gemäß FIG. 6 für jede hergestellte Leuchte 152 durchzuführen. Dann ist es möglich, dass die Einträge der Datenbank 101 repräsentativ für individuelle Leuchten 152 sind. In anderen Beispielen wäre es aber auch möglich, dass das Verfahren gemäß FIG. 6 für eine oder eine Teilmenge aller Leuchten einer Fertigungsreihe - für welche eine geringe Herstellungstoleranz bzw. Parameterstreuung angenommen wird - durchgeführt wird. In einem solchen Beispiel wäre es möglich, dass die Einträge der Datenbank jeweils repräsentativ für Fertigungsreihen von Leuchten sind. In einem solchen Beispiel wäre es zum Beispiel möglich, dass die verschiedenen Einträge 211-213 der Datenbank 101 für Leuchten 152 eine Vielzahl von Identifikationen von Leuchten, nämlich für alle Leuchten der entsprechenden Fertigungsreihe, beinhalten, zum Beispiel explizit oder Parametrisierung

FIG. 7 illustriert ein Flussdiagramm eines beispielhaften Verfahrens. Das Verfahren umfasst Schritt 1021, gemäß welchem das ausgewählte Betriebsgerät eingestellt wird. Dazu kann eine geeignete Konfigurationsdatei an das Betriebsgerät 151 übertragen werden und zum Beispiel in einem Speicher des Betriebsgeräts 141 geschrieben werden.

Zusammenfassend wurden voranstehend Techniken beschrieben, welche eine genaue Implementierung einer gewünschten Lichtcharakteristik ermöglichen. Die hierin beschriebenen Techniken basieren auf einer Datenbank, welche Einträge für verschiedene Leuchten und Betriebsgeräte umfasst. Dadurch können Toleranzen bei der Implementierung von Lichtcharakteristiken in den Einträgen abgebildet werden. Insbesondere kann eine Konvergenz zwischen unterschiedlichen Typen von Betriebsgeräten und unterschiedlichen Leuchten, die oftmals von verschiedenen Herstellern gefertigt werden, erreicht werden. Ungenauigkeiten und Fehler in der Konfiguration der Betriebsgeräte und gegebenenfalls der Leuchten können vermieden werden. Eine automatische Konfiguration der Betriebsgeräte ist möglich. Solche Techniken, wie sie hierin beschrieben wurden, können auch für das Ersetzen von existierenden Leuchten verwendet werden. Im Falle eines Fehlerereignisses einer Leuchte ist es möglich, die fehlerhafte Leuchte durch eine neue Leuchte zu ersetzen. Dies kann basierend auf der bekannten oder vermessenen Lichtcharakteristik der fehlerhaften Leuchte geschehen. Das bestehende Betriebsgerät kann entsprechend umprogrammiert werden, beispielsweise basierend auf einer Konfigurationsdatei die entsprechende hierin beschriebenen Techniken bereitgestellt wird.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

## Patentansprüche

1. Verfahren, das umfasst:
- Durchsuchen einer elektronischen Datenbank (101) mit Einträgen (211-213, 221-224) für eine Vielzahl von Betriebsgeräten (151) und eine Vielzahl von Leuchten (152) basierend auf einer Anfrage (115), die eine Lichtcharakteristik (260) indiziert,
- basierend auf dem Durchsuchen der elektronischen Datenbank (101):
Ermitteln einer Kombination aus einem Betriebsgerät (151) aus der Vielzahl von Betriebsgeräten (151) und einer Leuchte (152) aus der Vielzahl von Leuchten (152), sowie eines elektrischen Arbeitspunkts (251, 252) des Betriebsgeräts (151),
- Bereitstellen einer Ausgabe (116), welche das Betriebsgerät (151) der ermittelten Kombination, die Leuchte (152) der ermittelten Kombination, und den ermittelten Arbeitspunkt (251, 252) indiziert; und
- Automatisches Programmieren des Betriebsgeräts (151) der ermittelten Kombination zum Betrieb an dem ermittelten Arbeitspunkt (251, 252) basierend auf der Ausgabe, wobei eine elektronische Konfigurationsdatei (157), welche eine Identifikation des Betriebsgeräts (151) der ermittelten Kombination, eine Identifikation der Leuchte (152) der ermittelten Kombination und einen Konfigurationsparameter für den Arbeitspunkt (251, 252) umfasst, erstellt wird, wobei das Programmieren des Betriebsgeräts (151) der ermittelten Kombination ein Übertragen der elektronischen Konfigurationsdatei zu dem Betriebsgerät (151) umfasst.

2. Verfahren nach Anspruch 1,
wobei die Lichtcharakteristik (260) mindestens ein Element umfasst, das aus folgender Gruppe ausgewählt ist: eine Lichtstärke; eine Lichtfarbe; eine Lichteffizienz; eine Toleranz der Lichtstärke; eine Toleranz der Lichtfarbe; und eine räumliche Lichtverteilung.

3. Verfahren nach Anspruch 1 oder Anspruch 2,
wobei zumindest einige Einträge der elektronischen Datenbank (101) eine Abhängigkeit der Lichtcharakteristik (260) einer jeweiligen Leuchte (152) der Vielzahl von Leuchten (152) von dem Betriebsgerät (151) der ermittelten Kombination aus der Vielzahl von Betriebsgeräten (151) spezifizieren.

4. Verfahren nach einem der voranstehenden Ansprüche,
wobei zumindest einige Einträge der elektronischen Datenbank (101) eine Abhängigkeit der Lichtcharakteristik (260) einer jeweiligen Leuchte (152) aus der Vielzahl von Leuchten (152) von dem Arbeitspunkt (251, 252) des Betriebsgeräts (151) der ermittelten Kombination aus der Vielzahl von Betriebsgeräten (151) spezifizieren.

5. Verfahren nach einem der voranstehenden Ansprüche, das weiterhin umfasst:
- Durchführen mehrerer Kalibrationsmessungen der Lichtcharakteristik (260) für eine zu charakterisierende Leuchte (152), wobei unterschiedliche Kalibrationsmessungen der mehreren Kalibrationsmessungen unterschiedliche Kombinationen der zu charakterisierenden Leuchte (152) mit Betriebsgeräten (151) und/oder unterschiedliche Arbeitspunkte der Betriebsgeräte (151) betreffen,
- basierend auf den Kalibrationsmessungen: Erstellen eines Eintrags in der Datenbank (101) für die zu charakterisierende Leuchte (152).

6. Verfahren nach einem der voranstehenden Ansprüche,
wobei die Einträge der Datenbank (101) jeweils repräsentativ für individuelle Leuchten (152) sind oder repräsentativ für Fertigungsreihen von Leuchten (152) sind.

7. Verfahren nach einem der voranstehenden Ansprüche,
wobei die Anfrage (115) weiterhin einen Betriebsgerät-Betriebsmodus (151) indiziert, der aus folgender Gruppe ausgewählt ist: eine Lichtmanagementfähigkeit; ein Drift als Funktion der Zeit und/oder als Funktion der Temperatur; eine Lebensdauer; eine Dimmerfähigkeit; und ein Dimmerarbeitsmodus.

8. Verfahren nach einem der voranstehenden Ansprüche,
wobei der Arbeitspunkt (251, 252) einen vom Betriebsgerät (151) der ermittelten Kombination an die Leuchte (152) der ermittelten Kombination bereitgestellten Laststrom umfasst.

9. Verfahren nach einem der voranstehenden Ansprüche,
wobei der Arbeitspunkt (251, 252) einen vom Betriebsgerät (151) der ermittelten Kombination an die Leuchte (152) der ermittelten Kombination bereitgestellten Laststrom als Funktion der Betriebszeit umfasst.

10. Vorrichtung mit mindestens einem Prozessor, der eingerichtet ist, um die folgenden Schritte durchzuführen:
- Durchsuchen einer elektronischen Datenbank (101) mit Einträgen (211-213, 221-224) für eine Vielzahl von Betriebsgeräten (151) und eine Vielzahl von Leuchten (152) basierend auf einer Anfrage (115), die eine Lichtcharakteristik (260) indiziert,
- basierend auf dem Durchsuchen der elektronischen Datenbank (101): Ermitteln einer Kombination aus einem Betriebsgerät (151) aus der Vielzahl von Betriebsgeräten (151) und einer Leuchte (152) aus der Vielzahl von Leuchten (152), sowie eines elektrischen Arbeitspunkts (251, 252) des Betriebsgeräts (151),
- Bereitstellen einer Ausgabe (116), welche das Betriebsgerät (151) der ermittelten Kombination, die ausgewählte Leuchte (152) der ermittelten Kombination und den ermittelten Arbeitspunkt (251, 252) indiziert, und
- Automatisches Programmieren des Betriebsgeräts (151) der ermittelten Kombination zum Betrieb an dem ermittelten Arbeitspunkt (251, 252) basierend auf der Ausgabe, wobei eine elektronische Konfigurationsdatei (157), welche eine Identifikation des Betriebsgeräts (151) der ermittelten Kombination, eine Identifikation der Leuchte (152) der ermittelten Kombination und einen Konfigurationsparameter für den Arbeitspunkt (251, 252) umfasst, erstellt wird, wobei das Programmieren des Betriebsgeräts (151) der ermittelten Kombination ein Übertragen der elektronischen Konfigurationsdatei zu dem Betriebsgerät (151) umfasst.

## Claims

1. Method comprising:
- searching an electronic database (101) having entries (211-213, 221-224) for a plurality of operating devices (151) and a plurality of luminaires (152), on the basis of a request (115) that indicates a lighting characteristic (260),
- based on the searching of the electronic database (101): determining a combination of an operating device (151) from the plurality of operating devices (151) and a luminaire (152) from the plurality of luminaires (152), and also an electrical operating point (251, 252) of the operating device (151),
- providing an output (116) which indicates the operating device (151) of the determined combination, the luminaire (152) of the determined combination, and the determined operating point (251, 252); and
- automatically programming the operating device (151) of the determined combination for operation at the determined operating point (251, 252) on the basis of the output, wherein an electronic configuration file (157) is created that comprises an identification of the operating device (151) of the determined combination, an identification of the luminaire (152) of the determined combination, and a configuration parameter for the operating point (251, 252), wherein programming the operating device (151) of the determined combination comprises transmitting the electronic configuration file to the operating device (151).

2. Method according to Claim 1,
wherein the lighting characteristic (260) comprises at least one element selected from the following group: a light intensity; a light color; a light efficiency; a tolerance of the light intensity; a tolerance of the light color; and a spatial light distribution.

3. Method according to Claim 1 or Claim 2,
wherein at least some entries in the electronic database (101) specify a dependency of the lighting characteristic (260) of a respective luminaire (152) of the plurality of luminaires (152) on the operating device (151) of the determined combination from the plurality of operating devices (151).

4. Method according to any one of the preceding claims,
wherein at least some entries in the electronic database (101) specify a dependency of the lighting characteristic (260) of a respective luminaire (152) from the plurality of luminaires (152) on the operating point (251, 252) of the operating device (151) of the determined combination from the plurality of operating devices (151).

5. Method according to any one of the preceding claims, furthermore comprising:
- carrying out a plurality of calibration measurements of the lighting characteristic (260) for a luminaire (152) that is to be characterized, wherein different calibration measurements of the plurality of calibration measurements relate to different combinations of the luminaire (152) that is to be characterized with operating devices (151) and/or to different operating points of the operating devices (151),
- based on the calibration measurements: creating an entry in the database (101) for the luminaire (152) that is to be characterized.

6. Method according to any one of the preceding claims,
wherein the entries in the database (101) are respectively representative of individual luminaires (152) or representative of production series of luminaires (152).

7. Method according to any one of the preceding claims,
wherein the request (115) furthermore indicates an operating device operating mode (151) selected from the following group: a light management capability; a drift as a function of time and/or as a function of temperature; a service life; a dimmer capability; and a dimmer working mode.

8. Method according to any one of the preceding claims,
wherein the operating point (251, 252) comprises a load current supplied by the operating device (151) of the determined combination to the luminaire (152) of the determined combination.

9. Method according to any one of the preceding claims,
wherein the operating point (251, 252) comprises as a function of the operating time a load current supplied by the operating device (151) of the determined combination to the luminaire (152) of the determined combination.

10. Device having at least one processor which is configured to carry out the following steps:
- searching an electronic database (101) having entries (211-213, 221-224) for a plurality of operating devices (151) and a plurality of luminaires (152), on the basis of a request (115) that indicates a lighting characteristic (260),
- based on the searching of the electronic database (101): determining a combination of an operating device (151) from the plurality of operating devices (151) and a luminaire (152) from the plurality of luminaires (152), and also an electrical operating point (251, 252) of the operating device (151),
- providing an output (116) which indicates the operating device (151) of the determined combination, the selected luminaire (152) of the determined combination, and the determined operating point (251, 252), and
- automatically programming the operating device (151) of the determined combination for operation at the determined operating point (251, 252) on the basis of the output, wherein an electronic configuration file (157) is created that comprises an identification of the operating device (151) of the determined combination, an identification of the luminaire (152) of the determined combination, and a configuration parameter for the operating point (251, 252), wherein programming the operating device (151) of the determined combination comprises transmitting the electronic configuration file to the operating device (151).

## Revendications

1. Procédé, comprenant :
- la recherche dans une base de données électronique (101) comprenant des entrées (211-213, 221-224) pour une pluralité d'appareils de commande (151) et une pluralité de luminaires (152) sur la base d'une requête (115), qui indique une caractéristique lumineuse (260),
- sur la base de la recherche dans la base de données électronique (101) : la détermination d'une combinaison d'un appareil de commande (151) parmi la pluralité d'appareils de commande (151) et d'un luminaire (152) parmi la pluralité de luminaires (152), ainsi que d'un point de fonctionnement électrique (251, 252) de l'appareil de commande (151),
- la fourniture d'une sortie (116), qui indique l'appareil de commande (151) de la combinaison déterminée, le luminaire (152) de la combinaison déterminée et le point de fonctionnement (251, 252) déterminé ; et
- la programmation automatique de l'appareil de commande (151) de la combinaison déterminée pour la commande au point de fonctionnement déterminé (251, 252) sur la base de la sortie, un fichier de configuration électronique (157) étant créé, qui comprend une identification de l'appareil de commande (151) de la combinaison déterminée, une identification du luminaire (152) de la combinaison déterminée et un paramètre de configuration pour le point de fonctionnement (251, 252), la programmation de l'appareil de commande (151) de la combinaison déterminée comprenant une transmission du fichier de configuration électronique à l'appareil de commande (151).

2. Procédé selon la revendication 1,
la caractéristique lumineuse (260) comprenant au moins un élément, choisi dans le groupe suivant : une intensité lumineuse ; une couleur de lumière ; une efficacité lumineuse ; une tolérance de l'intensité lumineuse ; une tolérance de la couleur de lumière ; et une répartition lumineuse spatiale.

3. Procédé selon la revendication 1 ou la revendication 2,
au moins certaines entrées de la base de données électronique (101) spécifiant une dépendance entre la caractéristique lumineuse (260) d'un luminaire (152) respectif de la pluralité de luminaires (152) et l'appareil de commande (151) de la combinaison déterminée parmi la pluralité d'appareils de commande (151).

4. Procédé selon l'une quelconque des revendications précédentes,
au moins certaines entrées de la base de données électronique (101) spécifiant une dépendance entre la caractéristique lumineuse (260) d'un luminaire (152) respectif de la pluralité de luminaires (152) et le point de fonctionnement (251, 252) de l'appareil de commande (151) de la combinaison déterminée parmi la pluralité d'appareils de commande (151).

5. Procédé selon l'une quelconque des revendications précédentes, qui comprend en outre :
- la réalisation de plusieurs mesures d'étalonnage de la caractéristique lumineuse (260) pour un luminaire (152) à caractériser, différentes mesures d'étalonnage de la pluralité de mesures d'étalonnage concernant des combinaisons différentes du luminaire (152) à caractériser avec des appareils de commande (151) et/ou des points de fonctionnement différents des appareils de commande (151),
- sur la base des mesures d'étalonnage : la création d'une entrée dans la base de données électronique (101) pour le luminaire (152) à caractériser.

6. Procédé selon l'une quelconque des revendications précédentes,
les entrées de la base de données électronique (101) étant respectivement représentatives de luminaires (152) individuels ou représentatives de lots de luminaires (152).

7. Procédé selon l'une quelconque des revendications précédentes,
la requête (115) indiquant en outre un mode de commande d'appareil de commande (151), qui est choisi dans le groupe suivant : une aptitude à la gestion lumineuse ; une dérive en fonction du temps et/ou en fonction de la température ; une durée de vie ; une aptitude de variateur ; et un mode de travail de variateur.

8. Procédé selon l'une quelconque des revendications précédentes,
le point de fonctionnement (251, 252) comprenant un courant de charge fourni par l'appareil de commande (151) de la combinaison déterminée au luminaire (152) de la combinaison déterminée.

9. Procédé selon l'une quelconque des revendications précédentes,
le point de fonctionnement (251, 252) comprenant un courant de charge fourni par l'appareil de commande (151) de la combinaison déterminée au luminaire (152) de la combinaison déterminée en fonction de la durée de fonctionnement.

10. Dispositif comprenant au moins un processeur, qui est conçu pour réaliser les étapes suivantes :
- la recherche dans une base de données électronique (101) comprenant des entrées (211-213, 221-224) pour une pluralité d'appareils de commande (151) et une pluralité de luminaires (152) sur la base d'une requête (115), qui indique une caractéristique lumineuse (260),
- sur la base de la recherche dans la base de données électronique (101) : la détermination d'une combinaison d'un appareil de commande (151) parmi la pluralité d'appareils de commande (151) et d'un luminaire (152) parmi la pluralité de luminaires (152), ainsi que d'un point de fonctionnement électrique (251, 252) de l'appareil de commande (151),
- la fourniture d'une sortie (116), qui indique l'appareil de commande (151) de la combinaison déterminée, le luminaire (152) sélectionné de la combinaison déterminée et le point de fonctionnement (251, 252) déterminé et
- la programmation automatique de l'appareil de commande (151) de la combinaison déterminée pour la commande au point de fonctionnement déterminé (251, 252) sur la base de la sortie, un fichier de configuration électronique (157) étant créé, qui comprend une identification de l'appareil de commande (151) de la combinaison déterminée, une identification du luminaire (152) de la combinaison déterminée et un paramètre de configuration pour le point de fonctionnement (251, 252), la programmation de l'appareil de commande (151) de la combinaison déterminée comprenant une transmission du fichier de configuration électronique à l'appareil de commande (151).
